# EUROPEAN PATENT APPLICATION

(11) **EP 2 407 432 A1**
(43) Date of publication of application: **18.01.2012**
(21) Application number: 10169478.4
(22) Date of filing: 14.07.2010
(51) Int. Cl.: C02F 1/68, C02F 3/10, C02F 3/34, C02F 101/32

(54) **Composition for triggering microbiological processes in water and method of producing the same**

(71) Applicant: Söll GmbH, 95030 Hof (DE)
(72) Inventor: Willuweit, Thomas, 95030 Hof (DE)
(74) Representative: Sandmann, Wolfgang

(57) **Abstract**

The present invention is directed to a composition for triggering microbiological processes in water, comprising:
a) one or more chemoheterotropic microorganisms capable of decomposing water-immiscible substances;
b) at least one source of oxygen and/or at least one oxidizing agent;
c) at least one source of P and N; and
d) at least one substance capable of immobilizing components a)-c).

## Description

### BACKGROUND OF THE INVENTION

The present invention is directed to a composition for triggering microbiological processes in water, to a kit of parts comprising the components of said composition in distinct form, a method of producing such a composition and the use thereof for microbiologically decomposing water-immiscible substances, in particular crude oil and crude oil-derived substances.

Environmental pollution is a cause of major concern affecting ecosystems globally. Oil spill, an offshoot of this environmental pollution caused by spillage from tankers, release of effluents and offshore drilling activities, is adversely affecting the aquatic ecosystems. Chemical means of controlling oil spill are rapidly being developed, but they have the disadvantage that these chemical leave toxic wastes which may not be biodegradable. Physical means are only useful in clearing small areas.

Use of environmentally friendly methods such as bioremediation using microorganisms is an attractive approach to fight against environmental pollution caused by crude oil or crude oil-derived products. The adaption of microorganisms to hydrocarbons as a source of energy is well known. For example, it is known from Thavasi et al. "Plasmid incidence in four species of hydrocarbonoclastic bacteria isolated from oil-polluted marine environment", Biotechnology 6(3):349-452, 2007 that four species of hydrocarbonoclastic bacteria, B. *megaterium, C. kucheri, L. delbrueckii* and *P. aeruginosa* are capable of biodegrade crude oil.

The potential of *P. aeruginosa* to biodegrade crude oil was further assessed in the paper of Tsang Guo-Liang et al. "Biodegradation of crude oil by Pseudomonas aeruginosa in the presence of rhamnolipids", Journal of Zhejiang University SCIENCE, pages 725-730, 2005. In this paper, the capability of biodegradation of crude oil was assessed in the presence of rhamnolipides.

Presently, the problem appears that components of crude oil may be decomposed biologically by microorganisms, but only in a quite limited extent. This problem partially is due to the fact that a part of the crude oil is floating on the surface of the sea, another part is floating on a sub-sea level in several depth areas of the sea.

In particular, the lifetime and metabolic efficiency of the microorganisms used for decomposing crude oil and crude oil components is limited by the lack of substrates which they need to survive and/or to work efficiently. That is to say, hydrocarbonoclastic microorganisms usually do not work properly in decomposing crude oil components floating on the surface of the sea since they are located in the water phase situated below the oil film and therefore, the oxygen supply to the microorganisms usually is poor. Furthermore, the microorganisms need additional substances such as phosphorus and nitrogen to effectively work which are usually not present in an optimum amount in sea waters and other waters such as rivers and lakes.

There are attempts to immobilize microbiological cultures for triggering microbiological processes in water. For example, US 7,384,777 is directed to a microbiological culture for triggering processes in artificial bodies of water and provides an immobilized composition of a bacteria mixture wherein the bacteria are immobilized by a substance capable of forming a matrix such as artificial or naturally occurring polymers.

There is a need remaining to provide a composition suitable for environmentally-friendly and efficiently decomposing water-immiscible substances such as crude oil and crude oil components and which is being available in the large amounts required for combating oil spills of a dimension which recently appeared in the Gulf of Mexico.

### SUMMARY OF THE INVENTION

Therefore, it is an object of the present invention to provide a composition and method for triggering microbiological processes in water, which is in particular capable of decomposing water-immiscible substances on the surface and at lower levels of the sea. It is a further object of the invention to provide a composition and method for an efficient and long-term degradation of harmful substances derived from crude oil. It is a still further object to provide a composition for triggering microbiological processes in water which is available on an attractive cost level, in the required batch size and which does not affect the microbiological environment of the sea and other bodies of water.

Furthermore, it is an object of the invention to provide a kit of parts, premixes and a method of generating such a composition which allows an effective off-shore production of such a composition (on site) without the need of complicated devices which can be performed by local people trained for a short time and to be performed without any specific skills in the area of microbiology.

These objects are achieved by the subject matter of the independent claims. Preferred embodiments are described in the dependent claims.

The present invention is directed to a composition for triggering microbiological processes in water, in particular for decomposing water-immiscible substances, usually substances on a hydrocarbon basis. The present invention discloses a composition comprising the microorganisms capable of decomposing water-immiscible substances in combination with all substrates needed for them to efficiently work, where all components are present in immobilized form. This, on the one hand, guarantees a suitable level of those substrates, for example, of oxygen, phosphorus, nitrogen and trace elements, for a proper supply of the microorganisms and, on the other hand, avoids the waste of those chemicals and a potential pollution of oceans, lakes or rivers. This immobilized composition can be produced onshore or offshore, for example, may be produced in direct vicinity of the oil spill and can be produced in large amounts and without the need of professional skills.

The term "immobilized" in the context of the present invention means that the microorganisms are not used in the form of cell suspensions or cell solutions (as it is usually the case) but are surrounded by a matrix material containing nutrients and oxygen or an oxidizing agent before use.

### BRIEF DESCRIPTION OF THE DRAWINGS

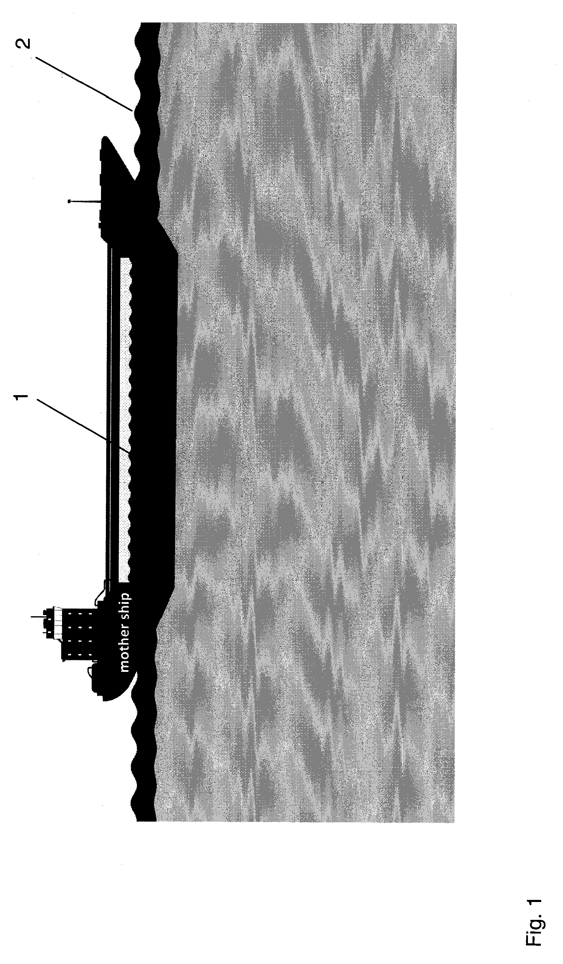

Figures 1-4 show the production and use of the composition of the present invention offshore.

### DETAILED DESCRIPTION OF THE INVENTION

According to the present invention, a composition for triggering microbiological processes in water is provided comprising one or more chemoheterotrophic microorganisms capable of decomposing water-immiscible substances; at least one source of oxygen and/or at least one oxidizing agent; at least one source of P and N; and at least one substance capable of immobilizing said components.

The microorganisms are preferably selected from (but not restricted to) the group consisting of microorganisms of the order *Actinomycetales,* such as those from the genus of *Mycobacterium, Nocardia sp., Arthrobacter sp.,* preferably *Arthrobacter citreus* or *Arthrobacter globiformis, Rhodococcus chlorophenolicus, Corynebacterium sp.;* microorganisms of the order *Pseudomonadales,* such as microorganisms from the genus of *Pseudomonas,* preferably *Pseudomonas stuzeri;* microorganisms of the order *Bacillales,* such as genus *Bacillus,* preferably *Bacillus subtilis, Bacillus pasteurii,* or *Bacillus proteus; and* hydrocarbonoclastic bacteria such as bacteria derived from the genus *Alcanivorax, Cycloclasticus, Marinobacter, Neptunomonas, Oleiphilus, Oleispira* and *Thalassolitus.*

For producing the immobilized bacteria according to the invention, conventionally cell suspensions are first cultured in a concentration of 1x10⁶ to 5x10¹⁰ cells per ml in a pure culture. In order to obtain microorganisms in a concentration as high as possible within the microcapsule or the like, the obtained cell suspensions are subsequently concentrated preferably to 5x10⁸ to 6x10⁹ cells per ml. The concentration can be realized by conventional filtration methods known in the art.

The term "chemoheterotroph" as used herein in particular comprises chemoorganoheterotrophic bacteria utilizing organic energy sources such as hydrocarbons, lipids and proteins in order to survive. This group comprises aerobic and anaerobic microorganisms. That is to say, chemoheterotrophic microorganisms according to the definition of the present invention comprise organisms that can survive and grow in oxygenated as well as non-oxygenated environments.

The composition of the present invention comprises at least one source of oxygen and/or at least one oxidizing agent, being an electron acceptor. These two groups of substances reflect the distinction of microorganisms in aerobic and anaerobic organisms. Aerobic organisms require a source of oxygen for their proper function, anaerobic organisms consume external electron acceptors (oxidizing agents) such as nitrate, Fe³⁺, Mn⁴⁺, sulphate, sulphur and fumarate for anaerobic respiration.

According to the invention, it is contemplated that a mixture of both, aerobic and anaerobic microorganisms is used and, therefore, also a combination of a source of oxygen and of oxidizing agents. This brings about the advantage that the composition of the present invention can function under all conceivable environmental conditions, for example, will also function after the source of oxygen has been consumed by aerobic microorganisms (then anaerobic microorganisms will use the oxidizing agent for anaerobic respiration and may further decompose water-immiscible substances).

The composition of the present invention preferably is immobilized in a matrix having the form of capsules, gels and/or gel spheres. Basically, the form of the immobilisate comprising the components of the present composition is not restricted. It depends on the intended use and the precise method of generating the same and may take also a random form.

The capsules or spheres preferably employed have preferably a diameter of approximately 100 to approximately 10,000 µm, in particular, of 100 to 5,000 µm, wherein the microorganisms, in a solid or a liquid form, are enveloped by, penetrated by and/or applied onto a solid to gel-like, in general polymeric, preferably porous polymer material.

By means of proper selection of the materials for the capsules/spheres, for example, natural or synthetic polymers, the capsules/spheres can be designed such that the bacteria and the substrate to be cleaned (water) can come into contact with one another. A possibly present capsule wall can be seal-tight, permeable, or semipermeable. The material of the capsules/spheres can also be of a multi-layer structure, i.e., one or several materials can be used. Accordingly, there is a plethora of possibilities for releasing the immobilized substance in a controlled fashion, for example, by destruction of the envelope or by permeation or also by chemical reactions which occur in the interior of the microcapsules.

In a preferred configuration of the present invention, the capsule wall is permeable for water and substances dissolved therein. In this embodiment, the contact of the harmful substances with the microorganisms is realized such that the water penetrates through the surface into the spheres and the cleaning processes take place in the interior. By means of the cleaning process, the microorganisms multiply until the holding capacity of the capsules/spheres or the gel has been reached and the wall bursts, i.e., the microorganisms are released.

For producing the immobilized microorganisms, natural or synthetic polymers can be used as the matrix materials.

In a preferred embodiment, gel-forming polymers and/or such polymers which are suitable for manufacturing the preferred forms such as capsules, spheres and/or gels are used. This has the advantage that bacteria can be received or embedded within the gel structure. Preferably, the materials should have such a strength and wear resistance that the immobilized microorganisms can be stored in this form under so-called life-supporting conditions, i.e., with addition of substrate and oxygen.

In a preferred embodiment such materials are used which dissolve or decompose slowly, preferably at a defined rate, in water so that slowly a release of microorganisms over a defined period of time takes place.

Moreover, polymers are preferred which optionally can also serve as a carbon source for the employed microorganisms. In this embodiment, the matrix is decomposed and degraded by the microorganisms. As soon as the structure has sufficiently large pores, a release of the microorganisms occurs.

In an embodiment, the matrix material for immobilising the components of the composition according to the present invention is selected from natural and/or synthetic polymers. Preferably, the polymers are selected from polymeric polysaccharides such as agar-agar or cellulose, proteins such as gelatin, gum arabic, albumin or fibrinogen, ethyl cellulose, methylcellulose, carboxy methyl ethyl cellulose, cellulose acetate, alkali cellulose sulphate, polyaniline, polypyrrole, polyvinyl pyrolidone, polystyrene, polyvinyl chloride, polyvinyl alcohol, polyethylene, polypropylene, copolymers of polystyrene and maleic acid anhydride, epoxy resins, polyethylene imines, copolymers of styrene and methyl methacrylate, polystyrene sulfonate, polyacrylate and poly methacrylate, polycarbonate, polyester, silicones, methylcellulose, mixtures of gelatin and water glass, gelatin and polyphosphate, cellulose acetate and phthalate, gelatin and copolymers of maleic acid anhydride and methyl vinyl ether, cellulose acetate butyrate, chitosan, poly dialkyl dimethyl ammonium chlorides, mixtures of poly acrylic acids and poly diallyl dimethyl ammonium chloride as well as any suitable mixtures thereof.

Furthermore, the substance capable of immobilizing the components preferably is selected from gel-forming polymers, in particular, alginate and/or alginate derivatives, or from film-forming polymers, in particular, from alkali cellulose sulphate, polyethylene imines, and/or poly dialkyl dimethyl ammonium chlorides.

Most preferably, the substance capable of immobilizing the components is biodegradable, thus providing an environmentally friendly composition which can be decomposed without any harmful residuals.

In a specially preferred embodiment, the alginates and alginate derivatives are used as matrix material. The alginates have the advantage that they have no negative effect on the activity of microorganisms and, moreover, they can be slowly decomposed by microorganisms over a certain period of time, such as a week up to several months. The slow decomposition of the matrix releases gradually the enclosed microorganisms in increasing quantities. From the biological decomposition of the wall material there results the further advantage that no residual materials or waste products remain in the body of water. When the immobilized bacteria cultures are placed, for example, in a corresponding container or a device for receiving and storing them, for example, a filter, into the medium to be treated, the filter can be refilled with the microorganisms according to the invention after dissolution of the employed immobilized microorganisms.

When the matrix material is present in the form of a capsule or sphere, the wall in a further preferred embodiment has a multi-layer configuration wherein gel-forming polymers and non-gel-forming polymers, preferably film-forming polymers, can be combined for the outer wall.

In a preferred embodiment, alginates or alginate derivatives are selected as the gel-forming materials, and polymers are selected from cellulose derivatives, in particular, sodium cellulose sulphate, poly dialkyl dimethyl ammonium chlorides and/or polyethylene imines, as the further, preferably film-forming, materials. The polymer materials which are used in addition to the alginates or alginate derivatives form preferably the outer capsule wall. It was found that by employing an outer capsule material, selected from the aforementioned polymers, the wear resistance of the microcapsules and thus the shelf life was significantly improved.

In an especially preferred embodiment, purified alginates, in particular those alginates described under the CAS numbers 9005-38-3 and 9005-32-7, are used as gel-forming materials. The purified alginates have the advantage that they contain only a minimal amount of free organic substances which could possibly impair the stability and activity of the microorganisms. The employed alginates have preferably a high content of L-guluron acid units.

One example of a useful alginate composition for use in the present invention is a combination of alginate and hyaluronic acid known under the expression "high-G-alginate".

In a preferred embodiment the oxygen source is selected from peroxides, preferably alkaline earth metal peroxides, most preferred from the group consisting of the peroxide of calcium, magnesium, and the oxidizing agent is selected from electron acceptors such as NO₃²⁻ and SO₄²⁻ and mixtures thereof.

As outlined above, both groups of substances can be used in combination whenever a mixture of aerobic and anaerobic microorganisms is used. The preferred substance as an example of an oxygen source is calcium peroxide, the most preferred oxidizing agent is gypsum (CaSO₄).

In a further embodiment, the source of P and N further comprises C and the wt.-ratio of P : N : C in it is about 1 : 14 : 105.

It is important to note that the source of P and N should be selected from protein-rich, but low fat and low carbohydrate materials. The reason for this is that in particular fat used as a source of P and N would compete as a nutritional source with the water-immiscible substances, usually hydrocarbons, which should be decomposed by the chemoheterotroph microorganisms. Therefore, the fat content of the P and N source should be as low as possible and low in carbohydrates the like.

Examples for materials which can be used as P and N source are meat, fish meal, animal blood meal, milk powder, soybean and wheat flour, or mixtures thereof. In addition to the aforementioned ingredients, the composition of the present invention may comprise trace elements such iron, copper, molybdenum and further elements.

The composition of the present invention usually is used for decomposing water-immiscible substances having a lower density than water and being preferably selected from crude oil and crude oil derived products such as kerosene, diesel fuel and other liquid hydrocarbons. That is to say, hydrocarbon based substances, which are floating on the surface of water. In this case, it is preferred that the composition of the present invention comprises floating materials which bring the composition to the site where a decomposition of the water-immiscible substances is needed, i.e. to the water's surface.

Further water-immiscible substances which can be decomposed by the composition of the present invention are natural oils and fats such as oils/fats derived from animals or plants.

In a further embodiment of the invention, the composition is for decomposing water-immiscible substances which have a density higher than water and, thus, cannot be decomposed on the surface of water. As outlined before, crude oil, for example, contains components, which are sinking down to different sub-sea levels and have to be decomposed there. In this case, the immobilisates of the present invention are adapted such that the density of the composition of the present invention corresponds to the density of the respective crude oil fraction in order to be effective and present at the same sub-sea level as the polluting crude oil fraction.

The floating materials in the composition of the present invention, if present, may be selected from coconut fibers, hemp fibers, cotton, animal hairs, plastic fibers, bark mulch, and glass wool, or mixtures thereof.

The floating materials may have an elongated form or may take the form of three-dimensional bodies, preferably of foams, pads, or woven/non-woven fabrics. As such, they may also provide a scaffold in order to stabilize the composition of the present invention. Preferably, their surface is coarse and if they have an elongated form, may have a hollow fiber structure. As examples, bamboo, hay, straw and other naturally occurring, biodegradable, cheap and easily available materials may be named. Apart from providing a scaffold, hollow fibers form transport channels for liquids in and out the immobilized composition.

The floating materials preferably are hydrophobized. This can be done by spraying hydrophobic liquids on the floating materials, such as solutions/suspensions of starch, silicates, or paraffin, silicone oil etc. or by immersing the floating materials in said liquids. The methods and materials used for hydrophobizing materials are well-known for a skilled person and can be done according to their standard knowledge.

In a preferred embodiment, the composition of the present invention comprises a microorganism as defined hereinabove, calcium peroxide, alginate or alginate derivatives, fish meal and, optionally, coconut fibers. The components preferably are contained in the following amounts based on the overall weight of the composition:

| | |
|---|---|
| alginate | 1-3 wt.-% |
| calcium peroxide | 1-10 wt.-% |
| fish meal | 0.1-10 wt.-% |

The composition of the present invention might be manufactured in a ready-to-use form in order to be easily stored, shipped and used by anyone without needing any further steps of manufacturing or skills.

In a further aspect, the present invention is directed to a kit of parts comprising the following components:
a) one or more chemoheterotrophic microorganisms capable of decomposing water-immiscible substances;
b) at least one source of oxygen and/or at least one oxidizing agent;
c) at least one source of P and N; and
d) at least one substance capable of immobilizing components a)-c).

The kit of parts is provided as a means for manufacturing the final composition of the present invention. That is to say, it comprises four different components which are stored separated from each other: a starter batch of microorganisms containing microorganisms cultured according to their special culturing needs in a pure culture and in a suitable density along with a sufficient amount of water; at least one source of oxygen and/or at least one oxidizing agent; at least one source of P and N; and the substance capable of immobilizing these components, each in separated containers. The kit of parts will be delivered to the consumer and will be converted into a suitable composition of the present invention on site. In more detail, the starter batch, as an example, as a highly-concentrated solution of microorganisms is supplemented with a mixture of water and water-immiscible substances (for example by pumping polluted sea water into an on-board tank) and the other substrates thereby creating an "enrichment batch". Or, as an alternative, the starter batch of the microorganisms is added to the mixture of water and water-immiscible substances and the other substrates in order to provide said enrichment batch (see Fig. 1).

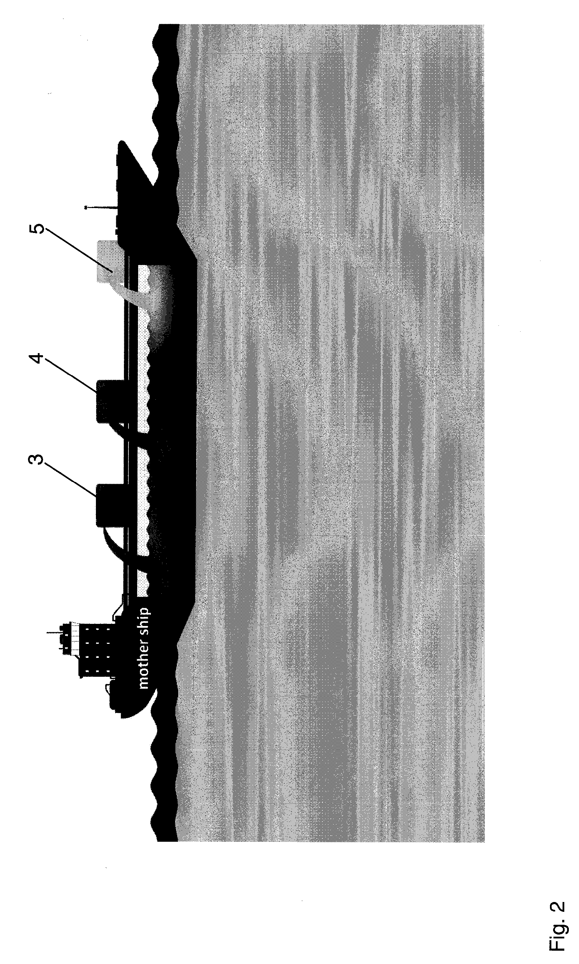

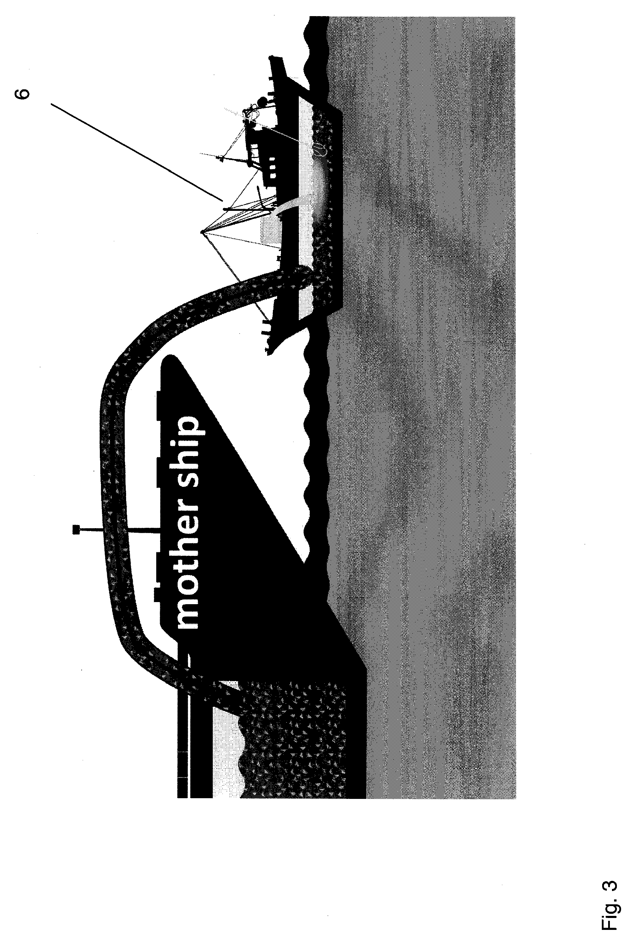

In a next step, components b) - c) are added (see Fig. 2). In a final step, if alginate is used as an immobilizing agent, an alginate solution is admixed and the whole premix might be added into a solution of CaCl₂ or, the solution of CaCl₂ might be added to the premix thereby forming an immobilized composition by gel-forming (see Fig. 3).

Therefore, according to a third aspect, the present invention is directed to a method of producing a composition according to one or more of the preceding embodiments comprising the steps of:
a) mixing a starter batch of microorganisms, at least one source of P and N and at least one source of oxygen and/or at least one oxidizing agent;
b) admixing at least one substance capable of immobilizing the components of the composition; and
c) forming an immobilized composition.

Preferably, the source of P and N, the source of O₂ and/or at least one oxidizing agent and the substance capable of immobilizing said components are as defined herein before.

In a preferred embodiment, the method comprises the steps of
a) mixing a starter batch of the microorganisms, fish meal, and a suspension of calcium peroxide, thus forming a liquid premix;
b) admixing alginate or an alginate derivative and optionally coconut fibers;
c) adding the premix into a solution of CaCl₂ or adding a solution of CaCl₂ to the premix thereby forming an immobilized composition by gel-forming.

The alginate or alginate derivative preferably is admixed as an aqueous solution having 0.1 to 10 weight percent of alginate or alginate derivative. The solution of CaCl₂ is added in an amount of 3-4 wt-% based on the overall weight of the composition, and wherein the CaCl₂ solution is 2-40 wt.-% CaCl₂ in water.

In a further aspect, the invention is directed to the use of the composition or the kit of parts of the present invention for decomposing crude-oil derived substances, vegetable and animal oils/fats which are contaminating waters in rivers, lakes or oceans.

By using the compositions of the present invention it is possible to provide a composition containing oil-decomposing microorganisms in a consortium of complementing microorganisms combined with a long-term and efficient oxygen source, a clearly defined phosphorus and nitrogen source and trace-element storage.

In the following, a non-limiting example of a specific embodiment of the present invention is shown:

### EXAMPLES

This example is based on a situation offshore, wherein a decomposition of crude oil derived from an oil spill is intended.

As it can be seen from Figures 1 to 4, the only devices which are required to carry out the invention, i. e. to produce and use the composition of the present invention offshore, are a mothership containing a mixture of oil and sea water 1 which is easily provided by pumping oil 2 and sea water in a specified mixture into a storage tank of the mothership.

In a next step, a P and N source 3 (containing hydrophobic fibers in order to decrease the density and to provide floatability of the final product), an oxygen source and/or an oxidizing agent 4 and a starter batch 5 of microorganisms are added to the mixture of oil and sea water 1. This liquid premix is left for a timeframe of 6 to 18 hours in order to provide an enrichment culture of the microorganisms.

Next, the liquid premix is transferred to smaller ships containing storage tanks which provide for the generation of the final immobilized composition.

To achieve this, a solution of the immobilizing agent 6 (for example an alginate solution) is added to the premix followed by forming an immobilisate (for example by the addition of a calcium chloride solution of appropriate concentration).

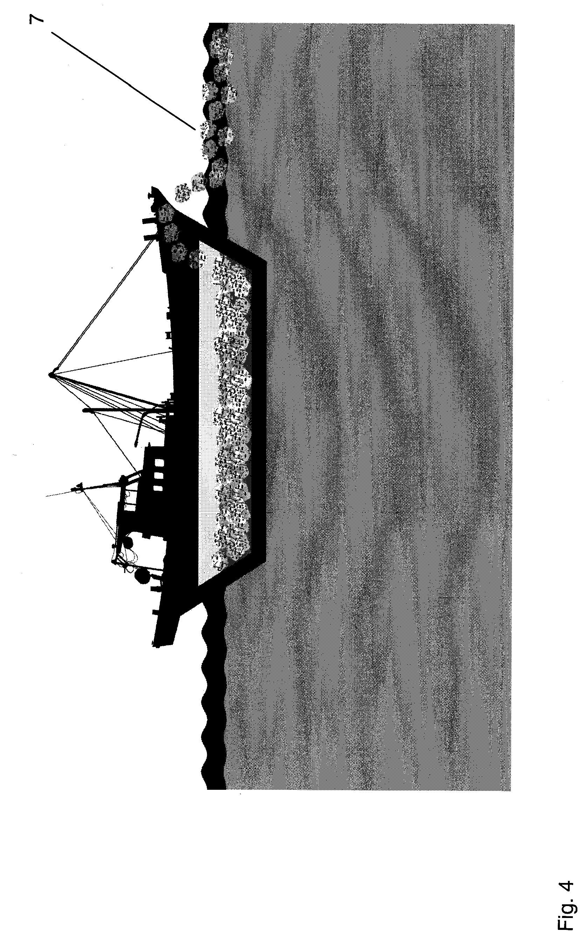

As it can be seen in Figure 4, the composition of the present invention then is formed on board as a nugget-like structure 7 which can be easily transferred to the affected area, i.e. the area of the oil spill.

The composition of the present invention then floats right under the surface and is pulled towards the oil film.

## Claims

1. Composition for triggering microbiological processes in water, comprising
a) one or more chemoheterotrophic microorganisms capable of decomposing water-immiscible substances;
b) at least one source of oxygen and/or at least one oxidizing agent;
c) at least one source of P and N; and
d) at least one substance capable of immobilizing components a)-c).

2. The composition of claim 1, wherein the microorganisms are selected from the group of microorganisms of the order *Actinomycetales,* such as those from the genus of *Mycobacterium, Nocardia sp., Arthrobacter sp.,* preferably *Arthrobacter citreus* or *Arthrobacter globiformis, Rhodococcus chlorophenolicus, Corynebacterium sp.;*
microorganisms of the order *Pseudomonadales,* such as microorganisms from the genus of *Pseudomonas,* preferably *Pseudomonas stuzeri;*
microorganisms of the order *Bacillales,* such as genus *Bacillus,* preferably *Bacillus subtilis, Bacillus pasteurii,* or *Bacillus proteus; and*
hydrocarbonoclastic bacteria such as bacteria derived from the genus *Alcanivorax, Cycloclasticus, Marinobacter, Neptunomonas, Oleiphilus, Oleispira* and *Thalassolitus.*

3. The composition of claim 1 or 2, wherein the components are immobilized in a matrix having the form of capsules, gels and/or gel spheres.

4. The composition of claim 3, wherein the matrix material is selected from natural and/or synthetic polymers.

5. The composition of claim 4, wherein the polymers are selected from polymeric polysaccharides such as agar-agar or cellulose, proteins such as gelatin, gum arabic, albumin or fibrinogen, ethyl cellulose, methylcellulose, carboxy methyl ethyl cellulose, cellulose acetate, alkali cellulose sulfate, polyaniline, polypyrrole, polyvinyl pyrolidone, polystyrene, polyvinyl chloride, polyvinyl alcohol, polyethylene, polypropylene, copolymers of polystyrene and maleic acid anhydride, epoxy resins, polyethylene imines, copolymers of styrene and methyl methacrylate, polystyrene sulfonate, polyacrylate and poly methacrylate, polycarbonate, polyester, silicones, methylcellulose, mixtures of gelatin and water glass, gelatin and polyphosphate, cellulose acetate and phthalate, gelatin and copolymers of maleic acid anhydride and methyl vinyl ether, cellulose acetate butyrate, chitosan, poly dialkyl dimethyl ammonium chlorides, mixtures of poly acrylic acids and poly diallyl dimethyl ammonium chloride as well as any suitable mixtures thereof.

6. The composition of one or more of the preceding claims, wherein the substance capable of immobilizing the components is selected from gel-forming polymers, in particular, alginate and/or alginate derivatives, or from film-forming polymers, in particular, from alkali cellulose sulfate, polyethylene imines, and/or poly dialkyl dimethyl ammonium chlorides.

7. The composition of one or more of the preceding claims, wherein the oxygen source is selected from peroxides, preferably alkaline earth metal peroxides, most preferred from the group consisting of the peroxide of calcium, magnesium, and wherein the oxidizing agent is selected from electron acceptors such as NO₃²⁻ and SO₄²⁻ and mixtures thereof.

8. The composition of one or more of the preceding claims, wherein the source of P and N further comprises C and the wt.-ratio of P : N : C is about 1 : 14 : 105.

9. The composition of one or more of the preceding claims, wherein the at least one source of P and N is selected from protein rich materials being low in fat and carbohydrates..

10. The composition of claim 9, wherein the materials are derived from meat, fish meal, animal blood meal, milk powder, soybean and wheat flour, or mixtures thereof.

11. The composition of one or more of the preceding claims, wherein the water-immiscible substances have a lower density than water and are preferably selected from crude oil and crude oil derived products such as kerosene, diesel fuel, and other liquid hydrocarbons.

12. The composition of one or more of the preceding claims, further comprising floating materials.

13. The composition of claim 12, wherein the floating material is selected from bamboo, hay, straw, coconut fibers, hemp fibers, cotton, animal hairs, plastic fibers, bark mulch, and glass wool, or mixtures thereof.

14. The composition of claim 12 or 13, wherein the floating materials have an elongated form or may take the form of three-dimensional bodies, preferably of foams, pads, or woven/non-woven fabrics.

15. The composition of claim 12-14, wherein the floating materials are hydrophobized.

16. The composition of one or more of the preceding claims, comprising microorganisms according to claim 2, calcium peroxide, alginate or alginate derivative, fish meal and optionally coconut fibers.

17. The composition of claim 16, wherein the components are contained in the following amounts based on the overall weight of the composition:
| | |
|---|---|
| alginate | 1-3 wt.-% |
| calcium peroxide | 1-10 wt.-% |
| fish meal | 0.1-10 wt.-% |

18. The composition of one or more of the preceding claims having a ready-to-use form.

19. A kit-of-parts comprising the following components
a) an starter batch of microorganisms as defined in claim 2;
b) at least one source of oxygen and/or at least one oxidizing agent;
c) at least one source of P and N; and
d) at least one substance capable of immobilizing components a)-c).

20. A method of producing a composition according to one or more of the preceding claims comprising the steps of:
a) mixing a starter batch of microorganisms, at least one source of P and N and at least one source of oxygen and/or at least one oxidizing agent;
b) admixing at least one substance capable of immobilizing the components of the composition; and
c) forming an immobilized composition.

21. The method of claim 20, wherein the microorganisms are as defined in claim 2.

22. The method of claims 20 or 21, wherein the source of P and N, the source of O₂ and/or at least one oxidizing agent, and the substance capable of immobilizing said components are as defined in one or more of claims 1-18.

23. The method of claims 20 - 22, comprising the steps of:
a) mixing a starter batch of the microorganisms, fish meal, and a suspension of calcium peroxide, thus forming a liquid premix;
b) admixing alginate or an alginate derivative and optionally coconut fibers;
c) adding the premix into a solution of CaCl₂ or adding a solution of CaCl₂ to the premix thereby forming an immobilized composition by gel-forming.

24. The method of claim 23, wherein the alginate or alginate derivative are admixed as 0.1-10 wt.-% aqueous solution.

25. The method of claim 23, wherein the solution of CaCl₂ is added in an amount of 3-4 wt-% based on the overall weight of the composition, and wherein the CaCl₂ solution is 2-40 wt.-% CaCl₂ in water.

26. A premix as obtainable in step a) of claim 23.

27. Use of the composition of one or more of claims 1-18 or of the kit-of-parts of claim 19 for microbiologically decomposing water-immiscible substances, in particular crude oil and crude-oil derived substances, vegetable and animal oils/fats which are contaminating waters in rivers, lakes or oceans.
